# EUROPEAN PATENT SPECIFICATION

(11) **EP 1 003 608 B1**
(45) Date of publication and mention of the grant of the patent: **06.11.2002**
(21) Application number: 98940710.1
(22) Date of filing: 13.07.1998
(51) Int. Cl.: B02C 19/18

(54) **METHOD OF PRODUCING POWDER MATERIALS**
VERFAHREN ZUR HERSTELLUNG VON PULVERFÖRMIGEM MATERIAL
PROCEDE DE PRODUCTION DE MATERIAUX EN POUDRE

(30) Priority: 13.08.1997 RU 97114487
(43) Date of publication of application: 31.05.2000
(73) Proprietor: Gloukharev, Nikolai Fedorovich, St. Petersburg, 192212 (RU)
(72) Inventor: GLOUKHAREV, Nikolai Fedorovich, St.Petersburg, 192212 (RU); ZAROGATSKY, Leonid Petrovich, St.Petersburg, 198052 (RU); LEVINSON, Valery Grigorievich, St.Petersburg, 198303 (RU); MOROZOV, Vyacheslav Sergeevich, St.Petersburg, 196143 (RU)
(74) Representative: von Füner, Alexander, Prof.h.c. Dr.
(86) International application number: PCT/RU98/00226
(87) International publication number: WO 99/008793

(56) References cited:
- US-A- 5 507 439
- SOVIET PATENTS ABSTRACTS Section PQ, Week 942831 August 1994 Derwent Publications Ltd., London, GB; Class P41, AN 94-232682 XP002083619 & SU 1 811 421 A (DNEPR ARTEM MINING INST) , 23 April 1993
- SOVIET PATENTS ABSTRACTS Section PQ, Week 931026 April 1993 Derwent Publications Ltd., London, GB; Class P41, AN 93-084338 XP002083620 & SU 1 724 369 A (DNEPR CIVIL ENG INST) , 7 April 1992

## Description

### Field of the Invention

The present invention relates to the technology of getting solid dry materials, particularly, to the way of obtaining the dispersion-conditioned powder materials. It may be used in mining and building branches of industry.

### Background of the Invention

Different method of physical action on the material treated are known. Thus, it is known the method of getting dispersion conditioned materials (I). It comprises electromagnetic conditioning of the polyfractional mixture of the processing material, its separation, and the collection of finished powder material. It should be noted that in the chosen as prototype method the electromagnetic separation is carried out after the polyfractional mechanical mixture has been formed, i.e. the electromagnetic conditioning does not take place in the process of grinding. Such electromagnetic conditioning does not permit for concentrated field forces to work efficiently with structural defects of the processed material mixture, in particular, with point defects (2). Thus, as the action on the structural defects of the mixture treated being not enough, it is impossible to succeed in increasing its susceptibility to further separation.

There is known in the art the method of production for ground powder material (3) that includes electromagnetic conditioning as a transfer of electrostatic charge to primary powder material and grinding of electrostatically charged powder material. The electrostatic charge is transferred using an alternating current (AC) or direct current (DC) high-voltage generator with voltage from 10.000 to 1.000.000 V and frequency from 1 to 10.000 Hz, i.e., the powder is to be charged or electrized or polarized by high voltage before grinding.

There is a mill (4) known in the art that functions by method of electromagnetic conditioning of material treated. The material to be further ground (e.g., cement) is loaded, then high voltage is applied on two electrodes, electromagnets are turned on and then a current-conducting impeller fans dust-air mixture into an ionizer where particles become electrostatically charged. Then the charged particles are entrapped by the accelerator's electromagnetic field where the additional grinding takes place through collisions with neutral particles. Then the charged particles go to a neutralizer made as a current-conducting impeller where electrical neutralization and additional grinding collision with it take place with following separation in a vortex chamber.

Thereby, the aforesaid known in the art methods (3) and (4) contemplate electrization or polarization of the primary powder material through electrostatic charging of the particles by high voltage applying two electrodes to provide additional outer mechanical grinding forces improving the grinding quality. The charged particles are passively neutralized at the final stage of the grinding through contacting with a current-conducting grounded element. There is also no possibility of neutralizing electric couterpotentials on cracks and break fissures of the processing material during its grinding. The unneutralized potentials lead to partial cracks joining after mechanical treatment. As a result, the used for grinding energy is directed, instead of being used for breaking the particles, to their abrasion with their further rolling up to the spherical shape. In the process of separation as the rolled particles in their centrifugal rushing tend to rebound from separated material surface layer (wall layer), more undersize forming the finished product is taken away with separator flow. Thus, the undersereen materials appear to be of not enough close-cut fraction content.

Due to the said features the main disadvantage of the prior art aforementioned in the methods (1, 3, 4) is impossibility to obtain better precised separation into the target product of the preferable metric fraction corresponding to premium ones.

### Disclosing of the Invention

The essence of the offered method for getting the dispersed-conditioning material is the following: the electromagnetic conditioning of the material polyfractional mechanical mixture, its electroneutralization at grinding, separation, and the finished powder product collection. The electroneutralization is carried out by depolarizing electrical potential action on the material polyfractional mechanical mixture. Here, the electrical potential is set in preferable range of 10.0 ö 60.0 V. The method includes grinding of non-electrically-conducting material. When the potential value is less than 10.0 V, the mixture can not be converted into the state of full perceptibility to separation. But, if potential value is more than 60.0 V, it leads to parallel process of undesirable side reactions of electrochemical transformation of the material mixture.

Therefore, in accordance with the invention applied the material polyfractional mechanical mixture of the non-electricaly-conducting material is processed in an inverted way comparing to the methods (3) and (4) described above, videlicet, the electric charges obtained at grinding are to be discharged or electrically neutralized through application on the material of a depolarization potential through a single electrode.

As during the collision of crushing bodies with material mixture, the breaking speed of contact surfaces is high, large electrostatic charges remain on the tearing-off surfase and by aglomeration the particles make the grinding and separation difficult, thus, preventing the conditioning of the product. When grinding is initiated by depolarizing electric potential the shock air ionization during collision of grinding bodies occurs, and the corona discharge of high capacity appears. Under the action of electrical field the ions are moving in the direction of charged material particles and are electroneutralizing them.

The conditions are, therefore, created under which the fracture fissured surfaces developing in the particles in grinding are not saturated with excessive potentials. This phenomenon keeps developing the fissures due to avoiding their joining after collision under the action of surface polarized electric charges. Thus, more angular particles are formed, energy consumption for particle grinding decreases, and balled particle material is obtained. Separation is carried out at minimizing the reboud effect of conditioning angular grinding particles. In the process, the parasitic rebound dispersion of the material treated is put off to "underscreen fraction" which is used in formation of finished powder material. That the foul underscreen with rebound material is excluded creates the conditions of getting the finished powder material of more close-cut fractional, content. It is also possible to carry out the separation together with parallel general auxiliary electroneutralization of processing mixture. It is achieved initiating the separation by electric potential depolarizing triboelectric charges, thus, the finished powder material of preferable mitric fraction is obtained. It corresponds to the production of higher quality.

### Industrial application

### Examples of using the method suggested.

### Example 1.

For-the technological process of the offered method to work it is carried out the preparation of rawmaterial composition to form the material polyfractional mechanical mixture. The preparation is oriented towards getting high standard cement powder of narrow fraction used in construction solutions containing 55ö65% of favorable metric fraction with particle size of 3ö30 µm, in particular, the cement of trade mark 500 has been adopted as State Standard 25238-82.

The material mixture consisted of 95% mass initial clinker and 5% mass. gypsum. As reverse flow the over size more than 80 µm entered the mill from the separator. The raw material composition having been prepared, electromagnetic conditioning of polyfractional mechanical mixture is being carried out. Under the condition of electroneutralization the mixture is being ground and the foreseen conditioning is performed. The cement ball mill of diamiter 2,6 m., length 13 m. has been used for grinding. Drum revolution frequency is 16 rev/min. The specific cement surface being 350,0 m² /kg, the mill capacity was 26 t/hour. Depolarizing electric potential initiates the process of electroneutralization. To achieve this the depolarizing electric potential is given to material polyfractional mechanical mixture. Then, the separation of the obteined material polyfractional mechanical mixture is being performed. Mechanical centrifugal pneumatic method is applied to carry out the separation. In particular, mechanical centrifugal airventilating separator of scattering type is used. Separator diameter was 3,2 m., revolution frequency was 245 rev/min. Separator capacity was 30 t/hour.

The separation being over, the collection of the final powder material takes place. The material is of thin metric fraction without coarse, not enough desintegrated, grains which should be sent to regrinding.

In the course of technological process the current control on its parameters and transformation values is done. As a result, it is achieved more close-cut fraction of the cement produced. The shave of desirable valuable cement fraction of 3ö30 µm was 71 % mass. and that of high valuable cement fraction of 10ö30 µm was - 63%.

### Example 2.

To carry out the method offered the technological process is accomplished as in Example 1 corresponding to all its regimes and parameters, but the depolarizing electric potential is taken equal to its maximum 60 V and in prefferable range.

It has resulted in discharging the valuable cement fraction of 3ö30 µm up to 74% mass, and high valuable fraction of 10ö30 µm up to 65% mass.

### Example 3.

The technological process is carried out as in Example 1 following all its regimes and parameters, but the depolarizing electric potential is taken in its inter mediate value of 40.0 V in desirable range.

Here it has resulted in discharging 3ö30 µm valuable fraction for producing the cement up to 78% mass. and 10ö30 µm valuable fraction to produce up to 69 % mass.

The Table shows and compares positive results achieved by the method offered and proved by the examples mentioned above. The figures are compared with those of the production process of cement of trade mark 500 according to State Standard 25238-82.

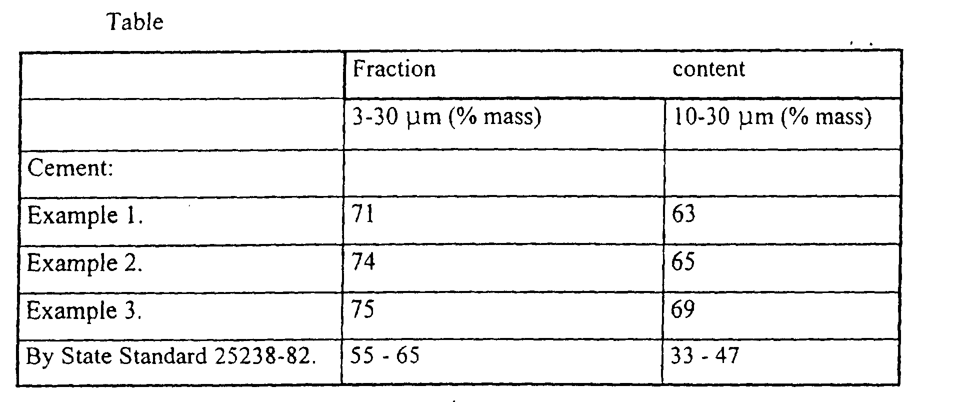

### The best variant of the Invention realization

From The Table it is seen that the best results of the method offered have been achieved in Example 3.

In the technological process of the method offered during grinding under the conditions of electroneutralization at depolarizing potential 40.0 V the discharge of valuable fraction of 3ö30 µm to get the cement up to 78% mass and that of high valuable fraction of 10ö30 µm with cement production up to 69% mass. has been achieved.

### INFORMATION SOURCES.

1. Author's Certificate USSR 1.431.864, I. cl. B07B 1/40 1988
2. Levich V.G. "Theoretical physics", M. Nauka, 1969, p. 75.
3. US Patent - US-A-5507439.
4. Author's Certificate USSR - SU-A-1.724.369 I.cl. B02C 19/18 1978.

## Claims

1. Method of producing powder materials including electromagnetic conditioning of produced material polyfractional mechanical mixture, its electroneutralization at grinding, separation, and collection of the finished powder material differing that the electroneutralization is performed by initiating its action with depolarizing electric potential.

2. Method of claim 1, differing that depolarizing electric potential is in the range of 10.0ö60.0 V.

3. Method of claim 1, differing that powder materials are non-electrically conductive.

## Patentansprüche

1. Verfahren zur Herstellung von pulverförmigen Stoffen durch elektromagnetische Konditionierung des gebildeten polyfraktionalen mechanischen Gemisches, seine elektrische Neutralisation unter Vermahlen, Auftrennen und Sammeln des als Endprodukt erhaltenen Pulvermaterials, **dadurch gekennzeichnet, dass** die elektrische Neutralisierung durch Initiierung seiner Wirkung mit einem depolarisierenden elektrischen Potential durchgeführt wird.

2. Verfahren nach Anspruch 1, **dadurch gekennzeichnet, dass** das depolarisierende elektrische Potential in einem Bereich von 10,0 bis 60,0 V liegt.

3. Verfahren nach Anspruch 1, **dadurch gekennzeichnet, dass** die pulverförmigen Stoffe elektrisch nichtleitend sind.

## Revendications

1. Procédé de production de matériaux en poudre comportant le conditionnement électromagnétique de mélange mécanique à multiples fractions de matériau produit, sa neutralisation électrique au niveau du broyage, de la séparation, et du recueil du matériau en poudre fini, à la différence que la neutralisation électrique se réalise en amorçant son action avec un potentiel électrique de dépolarisation.

2. Procédé selon la revendication 1, à la différence que le potentiel électrique de dépolarisation est dans la plage de 10,0 à 60,0 V.

3. Procédé selon la revendication 1, à la différence que les matériaux en poudre sont non électriquement conducteurs.
